# EUROPEAN PATENT SPECIFICATION

(11) **EP 2 423 485 B1**
(45) Date of publication and mention of the grant of the patent: **14.12.2016**
(21) Application number: 09843666.0
(22) Date of filing: 24.04.2009
(51) Int. Cl.: F02B 37/013, F02B 37/18, F02B 39/00, F02C 6/12

(54) **SUPERCHARGER SYSTEM FOR INTERNAL COMBUSTION ENGINES**
AUFLADESYSTEM FÜR VERBRENNUNGSMOTOREN
SYSTÈME DE TURBOCOMPRESSEUR POUR MOTEURS À COMBUSTION INTERNE

(43) Date of publication of application: 29.02.2012
(73) Proprietor: TOYOTA JIDOSHA KABUSHIKI KAISHA, Toyota-shi, Aichi-ken, 471-8571 (JP)
(72) Inventor: TANADA, Masayuki, Toyota-shi Aichi 471-8571 (JP)
(74) Representative: Winter, Brandl, Fürniss, Hübner, Röss, Kaiser, Polte - Partnerschaft mbB
(86) International application number: PCT/JP2009/058203
(87) International publication number: WO 2010/122668

(56) References cited:
- EP-A2- 1 936 147
- DE-A1- 19 811 782
- DE-A1- 19 816 645
- DE-B1- 2 233 970
- GB-A- 2 349 427
- JP-A- H07 507 122
- JP-A- 2002 534 626
- JP-A- 2003 531 996
- JP-A- 2008 157 236
- JP-U- S6 117 176
- JP-U- 61 017 176
- US-A- 5 528 902
- US-A1- 2004 040 300

## Description

### TECHNICAL FIELD

The present invention relates to a supercharger system for an internal combustion engine including a first supercharger and a second supercharger.

### BACKGROUND ART

JP 2005 133 651 A describes a prior art example of a supercharger system for an internal combustion engine. Typical prior art supercharger systems including that described in JP 2005 133 651 A includes a low-pressure supercharger and a high-pressure supercharger. More specifically, in an intake passage of an internal combustion engine, a low-pressure compressor wheel and a high-pressure compressor wheel, which is smaller than the low-pressure wheel, are arranged in this order from the intake upstream side. Further, in an exhaust passage of the internal combustion engine, a high-pressure turbine wheel and a high-pressure turbine wheel, which is larger than the high-pressure turbine wheel, are provided in this order from the exhaust upstream side. The low-pressure compressor wheel and high-pressure compressor are respectively accommodated in a low-pressure compressor housing and a high-pressure compressor housing. Further, the low-pressure turbine wheel and the high-pressure turbine wheel are respectively accommodated in a low-pressure turbine housing and a high-pressure turbine housing.

In one system, in the exhaust passage of the internal combustion engine, an exhaust bypass passage connects the upstream side and downstream side of the high-pressure turbine wheel and bypasses the high-pressure turbine wheel. A flow rate of the exhaust flowing to the high-pressure turbine wheel is controlled by controlling the opening of an exhaust bypass valve arranged in the bypass passage.

In such a supercharger system of the prior art, a plurality of compressor housings, turbine housings, and an exhaust bypass passage are necessary in addition to the internal combustion engine. Thus, for example, a structure in which the low-pressure supercharger and the high-pressure supercharger are coaxial and separated by a predetermined distance or a structure in which the low-pressure supercharger is separated by a predetermined distance and arranged vertically downward from the high-pressure supercharger is employed. However, in these cases, the overall size of the supercharger system and, consequently, the internal combustion engine becomes large. This makes it difficult to obtain space for the engine.

Further, the US 5 528 902 A describes a support housing for the fastening of exhaust gas turbochargers of an internal combustion engine. For providing a two-stage charging, two groups of exhaust gas turbochargers, each including a high-pressure turbine, a low-pressure turbine, a high-pressure compressor, and a low- pressure compressor, are arranged in a support housing.

Moreover, the DE 198 16 645 A1 discloses an exhaust gas turbocharger turbine with guide blades forming a guide cascade. Thereby, the guide blades are displaceable in the axial direction so that they project into a flow gap during braking operation and so that they are located in recesses of a housing wall part during normal operation.

Additional supercharger systems are also known from JP S61 17176 U, GB 2 349 427 A and DE 198 11 782 A1.

### DISCLOSURE OF THE INVENTION

It is an object of the present invention to provide a supercharger system for an internal combustion engine that reduces the overall size of the supercharger system.

To achieve the above object, a supercharger system for an internal combustion engine according to the present invention includes a first supercharger and a second supercharger. The first supercharger includes a first compressor wheel arranged in an intake passage of the internal combustion engine, a first turbine wheel arranged in an exhaust passage of the internal combustion engine and coupled by a first shaft to the first compressor wheel, a first compressor housing accommodating the first compressor wheel, and a first turbine housing accommodating the first turbine wheel. The second supercharger includes a second compressor wheel arranged in the intake passage, a second turbine wheel arranged in the exhaust passage and coupled by a second shaft to the second compressor wheel, a second compressor housing accommodating the second compressor wheel, and a second turbine housing accommodating the second turbine wheel. The first and second compressor housings and the first and second turbine housings are configured so that at least either one of part of the second compressor housing and part of the second turbine housing is located in a space formed between the first compressor housing and the first turbine housing.

In this structure, the overall size of the supercharger system in a direction orthogonal to the axial direction of the first shaft is smaller than a structure in which part of a second compressor housing or part of a second turbine housing unit is not located in the space. Accordingly, it is ensured that the overall size of the supercharger system is reduced.

Further, the first compressor wheel is larger in size in a radial direction than the second compressor wheel, and the first turbine wheel is larger in size in the radial direction than the second turbine wheel.

In this structure, the first compressor wheel is larger in size in the radial direction than the second compressor wheel, and the first turbine wheel is larger in size in the radial direction than the second turbine wheel. This ensures that the space formed between the first compressor housing and the second turbine housing is large compared to a reversed structure in which the first compressor wheel is smaller in size in the radial direction than the second compressor wheel, and the first turbine wheel is smaller in size in the radial direction than the second turbine wheel.

The second turbine housing accommodates a variable flow rate mechanism that can vary a flow rate of exhaust acting on the second turbine wheel.

In this structure, the flow rate of the exhaust acting on the second turbine wheel can be varied by controlling the opening of a variable flow rat valve.

Further, when the opening of the variable flow rate valve is controlled so that exhaust does not act on the second turbine wheel, the second turbine housing may function as a bypass passage that bypasses the second turbine wheel. As a result, the overall size of the supercharger system can be further reduced in comparison to, for example, a structure including a separate bypass passage that connects the upstream and downstream sides of the second turbine housing and bypasses the second turbine wheel.

In this case, the variable flow rate mechanism includes a cylinder valve that moves along an axial direction of the second shaft.

Further, it is preferable that the first and second compressor housings and the first and second turbine housings are configured so that part of the second compressor housing and part of the second turbine housing are both located in the space.

In this structure, the overall size of the supercharger system in the axial direction of the first shaft is smaller than a structure in which part of a second compressor housing or part of a second turbine housing unit is located in the space. Accordingly, it is further ensured that the overall size of the supercharger system is reduced.

Further, it is preferable that the second shaft is supported by a second bearing, which is a ball bearing.

Generally, an exhaust drive type supercharger includes a full-floating bearing, which receives radial load, and a thrust bearing, which receives thrust load, serving as bearings that support a shaft. In the above structure, the second bearing is a ball bearing that receives both radial load and thrust load. This shortens the second shaft in length in comparison to when the second bearing is formed by a full-floating bearing and a thrust bearing. Accordingly, part of the first compressor housing and part of the first turbine housing can both be easily located in the space formed between the first compressor housing and the second turbine housing.

In this structure, a variable flow rate valve that can vary the flow rate of the exhaust that acts on the second turbine wheel is formed by the cylinder valve, which moves along the axial direction of the second shaft, that is, in a direction perpendicular to the direction in which exhaust flows. This decreases the force required to drive the valve. Thus, the actuator of the variable flow rate mechanism can be reduced in size, and the overall size of the supercharger system can be further reduced.

Further, it is preferable that the first and second compressor housings and the first and second turbine housings are configured so that part of the second compressor housing and part of the second turbine housing are both located in the space, the first supercharger includes a first bearing that supports the first shaft and a first bearing housing that accommodates the first bearing, the second supercharger includes a second bearing that supports the second shaft and a second bearing housing that accommodates the second bearing, and the first bearing housing and the second bearing housing are formed integrally with each other.

In a structure in which part of the second compressor housing and part of the second turbine housing are both located in the space formed between the first compressor housing and the first turbine housing, the distance between the first bearing housing and the second bearing housing in the axial direction of the first shaft can decreased. Thus, by employing the structure described above so that the first bearing housing and the second bearing housing are formed integrally, the integration of the bearing housings reduces the number of components. Moreover, the overall size of the compressor housing does not increase when the bearing housings are integrated.

Further, the first compressor wheel is arranged at an upstream side of the second compressor wheel in the intake passage, the first and second compressor housings and the first and second turbine housings are configured so that part of the second compressor housing is located in the space, and the first compressor housing and the second compressor housing are formed integrally with each other.

In this structure, the integration of the compressor housings reduces the number of components. Further, the first compressor wheel is arranged at the upstream side of the second compressor wheel in the intake passage, and part of the second compressor housing is located in the space formed between the first compressor housing and the first turbine housing. Thus, the distance between the first compressor housing and the second compressor housing in the axial direction of the first shaft can decreased. Moreover, the overall size of the compressor housing does not increase when the compressor housings are integrated.

In this case, it is preferable that the first compressor wheel is larger in size in a radial direction than the second compressor wheel, and an intake bypass passage, which bypasses the second compressor wheel, is integrally formed with the first compressor housing and the second compressor housing.

In this structure, the integration of the first compressor housing, the second compressor housing, and the intake bypass passage reduces the number of components.

Alternatively, the first compressor housing and the second compressor housing are formed separately from each other.

In this case, the first compressor housing and the second compressor housing are connected by a connection unit formed by a resilient member.

In this structure, even if at least one of the first compressor housing and the second compressor housing includes a manufacturing variation or an assembly variation, such a variation is absorbed by resilient deformation of the connection unit. Accordingly, the compressor housings can easily be coupled to each other.

The first turbine wheel is arranged at a downstream side of the second turbine wheel in the exhaust passage, the first and second compressor housings and the first and second turbine housings are configured so that part of the second turbine housing is located in the space, and the first turbine housing and the second turbine housing are formed integrally with each other.

In this structure, the integration of the turbine housings reduces the number of components. Further, the first turbine wheel is arranged at the downstream side of the second turbine wheel in the exhaust passage, and part of the second turbine housing is located in the space formed between the first compressor housing and the first turbine housing. Thus, the distance between the first turbine housing and the second turbine housing in the axial direction of the first shaft can decreased. Moreover, the overall size of the turbine housing does not increase when the compressor housings are integrated.

Further, it is preferable that the first turbine wheel is larger in size in a radial direction than the second turbine wheel, and an exhaust bypass passage, which bypasses the first turbine wheel, is formed integrally with the first turbine housing and the second turbine housing.

In this structure, the first turbine housing, the second turbine housing, and the exhaust bypass passage are formed integrally with each other. This reduces the number of components.

Alternatively, the first turbine housing and the second turbine housing are formed separately from each other.

In this case, it is preferable that the first turbine housing and the second turbine housing are connected by a connection unit formed by a resilient member.

In this structure, even if at least one of the first turbine housing and the second turbine housing includes a manufacturing variation or an assembly variation, such a variation is absorbed by resilient deformation of the connection unit. Accordingly, the turbine housings can easily be coupled to each other.

Further, in the above structure, resilient deformation of the connection unit absorbs thermal expansion of the first turbine housing and the second turbine housing. Accordingly, cracks and the like caused by thermal expansion of the turbine housings are prevented.

In this case, the connection unit may have an accordion structure.

### BRIEF DESCRIPTION OF THE DRAWINGS

Fig. 1 is a schematic block diagram showing a supercharger system for an internal combustion engine according to a first embodiment of the present invention;
Fig. 2 is a plan view showing a space S formed between a low-pressure compressor housing and a low-pressure turbine housing in the supercharger system of Fig. 1;
Fig. 3 is a plan view showing the supercharger system of Fig. 1;
Fig. 4 is a cross-sectional view of the supercharger system in Fig. 3;
Fig. 5 is a partial cross-sectional view mainly showing a variable flow rate mechanism in the supercharger system of Fig. 4:
   Fig. 6(a) is a cross-sectional view mainly showing a lubricant supply-discharge mechanism for a bearing housing in the supercharger system of Fig. 3, and Fig. 6(b) is a cross-sectional view mainly showing a coolant supply-discharge mechanism for the bearing housing;
   Fig. 7(a) is a side view showing a supercharger system according to a second embodiment of the present invention taken from a low-pressure turbine housing, and Fig. 7(b) is a side view of the supercharger system taken from a low-pressure compressor housing;
   Fig. 8 is a partial cross-sectional view showing a modification of the high-pressure turbine; and
   Fig. 9 is a plan view showing a modification of a supercharger system according to the present invention.

### BEST MODE FOR CARRYING OUT THE INVENTION

### <First Embodiment>

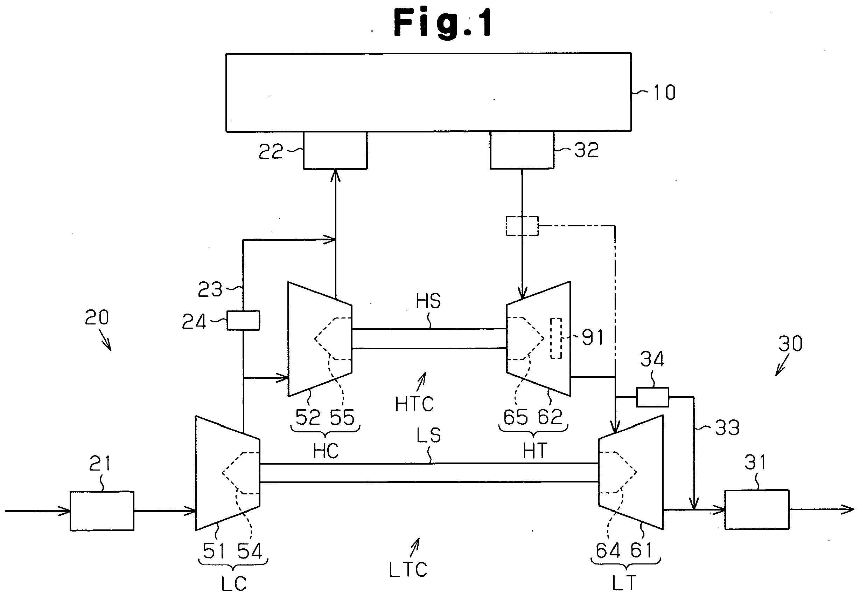

A supercharger system for an internal combustion engine according to a first embodiment of the present invention and applied as a supercharger system for a vehicle engine will now be described with reference to Figs. 1 to 6.

Fig. 1 schematically shows an internal combustion engine 1 of the present embodiment.

As shown in the drawing, an engine body 10 of the internal combustion engine 1 is connected an intake passage 20, which supplies intake air to the engine body 10, and an exhaust passage 30, which discharges exhaust from the engine body 10.

The intake passage 20 includes an air cleaner 21, a centrifugal low-pressure compressor LC, a centrifugal high-pressure compressor HC, and an intake manifold 22, which are arranged in this order from the upstream side. Further, an intake bypass passage 23 connects a portion of the intake passage 20 between the low-pressure compressor LC and the high-pressure compressor HC and a portion of the intake passage 20 at the downstream side of the high-pressure compressor HC to bypass the high-pressure compressor HC while. The intake bypass passage 23 includes an intake bypass valve 24. A flow rate of the intake air flowing to the high-pressure compressor HC is controlled by controlling the opening of the intake bypass valve 24. The low-pressure compressor LC includes a low-pressure compressor wheel 54 and a low-pressure compressor housing unit 51 that accommodates the wheel. Further, the high-pressure compressor HC includes a high-pressure compressor wheel 55 and a high-pressure compressor housing unit 52 that accommodates the wheel.

The exhaust passage 30 includes an exhaust manifold 32, a radial flow high-pressure turbine HT, a radial flow low-pressure turbine LT, and a catalytic device 31, which are arranged in this order from the upstream side. Further, an exhaust bypass passage 33 connecting a portion of the exhaust passage 30 between the high-pressure turbine HT and the low-pressure turbine LT and a portion of the exhaust passage 30 at the downstream side of the low-pressure turbine LT to bypass the low-pressure turbine LT. The exhaust bypass passage 33 includes an exhaust bypass valve 34. A flow rate of the exhaust flowing to the low-pressure turbine LT is controlled by controlling the opening of the exhaust bypass valve 34. The low-pressure turbine LT includes a low-pressure turbine wheel 64 and a low-pressure turbine housing unit 61 that accommodates the wheel. Further, the high-pressure turbine HT includes a high-pressure turbine wheel 65 and a high-pressure turbine housing unit 62, which accommodates the wheel. A supercharger system for a internal combustion engine normally includes a bypass passage, which connects the upstream side of the high-pressure turbine HT and a portion of the exhaust passage 30 between the high-pressure turbine HT and the low-pressure turbine LT, and a control valve, which is arranged in the passage to control the flow rate of the exhaust flowing to the high-pressure turbine HT (double-dashed line in Fig. 1). In contrast, in the present embodiment, a cylinder valve 91, which will be described in detail later, is arranged in the high-pressure turbine housing unit 62 to eliminate the structure of the above-described bypass passage. A low-pressure shaft LS couples the low-pressure compressor wheel 54 and the low-pressure turbine wheel 64. The low-pressure compressor LC, the low-pressure turbine LT, and the low-pressure shaft LS form an exhaust-driven type low-pressure supercharger LTC. Further, a high-pressure shaft HS couples the high-pressure compressor HC and the high-pressure turbine HT. The high-pressure compressor HC, the high-pressure turbine HT, and the high-pressure shaft HS form an exhaust-driven type high-pressure supercharger HTC.

The supercharger system for an internal combustion engine of the prior art includes a plurality of compressors, turbines, and an exhaust bypass passage. This increases the overall size of the supercharger system and, consequently, the internal combustion engine becomes large. Thus, it is difficult to obtain space in the vehicle.

To solve the problem, the present embodiment reduces the overall size of the supercharger system by forming the compressor housing units 51 and 52 and the turbine housing units 61 and 62 as described below.

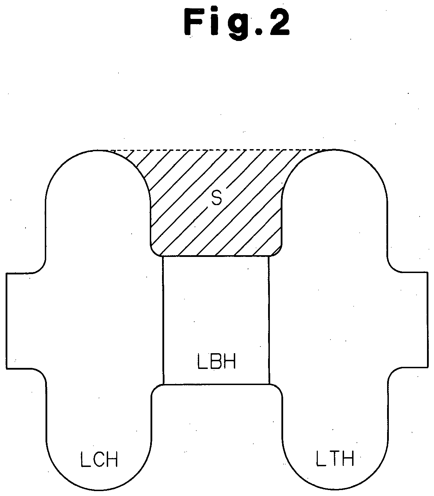

As shown in Fig. 2, a space S is formed between a low-pressure compressor housing LCH and a low-pressure turbine housing LTH. In the supercharger system of the prior art, the space S is dead space.

In the present embodiment, the compressor housing units 51 and 52 and the turbine housing units 61 and 62 are configured so that part of the high-pressure compressor housing unit 52 and part of the high-pressure turbine housing unit 62 are both located in the space S formed between the low-pressure compressor housing unit 51 and the low-pressure turbine housing unit 61.

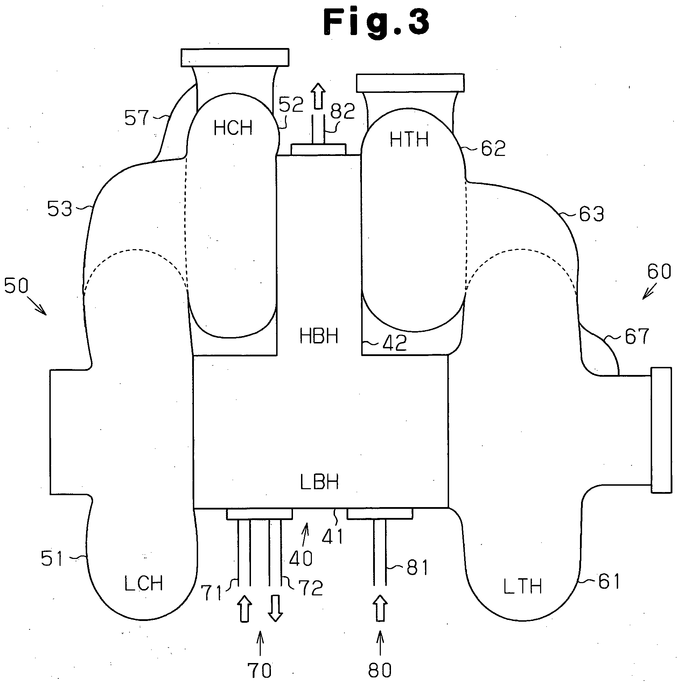

The structure of the supercharger in the present embodiment will now be described with reference to Figs. 3 to 6.

Fig. 3 is a plan view showing the structure of the supercharger in the present embodiment.

As shown in the drawing, the low-pressure supercharger LTC and the high-pressure supercharger HTC are arranged so that their shafts LS and HS may be parallel with each other.

The compressor housing 50 includes the low-pressure compressor housing unit 51, the high-pressure compressor housing unit 52, a compressor connection unit 53, which connects the compressor housing units 51 and 52, and an intake bypass unit 57 that are formed integrally with one another. The intake bypass passage 23 is formed in the intake bypass unit 57. The compressor connection unit 53 is located inward (rightward in Fig. 3) from an outer end (leftward end in Fig. 3) of the low-pressure compressor housing unit 51 in the axial direction of the low-pressure shaft LS and inward (downward in Fig. 3) from an outer end (upward end in Fig. 3) of the high-pressure compressor housing unit 52 in a direction (vertical direction in Fig. 3) perpendicular to the axial direction of the high-pressure shaft HS. Further, the intake bypass unit 57 is located inward (rightward in Fig. 3) from an outer end (leftward end in Fig. 3) of the compressor connection unit 53 in the axial direction of the high-pressure shaft HS and inward (downward in Fig. 3) from an outer end (upward end in Fig. 3) of the high-pressure compressor housing unit 52 in the direction (vertical direction in Fig. 3) perpendicular to the axial direction of the high-pressure shaft HS. In the present embodiment, the compressor housing 50 is formed by undergoing casting and machining.

A turbine housing 60 includes the low-pressure turbine housing unit 61, the high-pressure turbine housing unit 62, a turbine connection unit 63, which connects the turbine housing units 61 and 62, and an exhaust bypass unit 67 that are formed integrally. The exhaust bypass passage 33 is formed in the exhaust bypass unit 67. The turbine connection unit 63 is located inward (leftward in Fig. 3) from an outer end (rightward end in Fig. 3) of the low-pressure turbine housing unit 61 in the axial direction of the low-pressure shaft LS and inward (downward in Fig. 3) from an outer end (upward end in Fig. 3) of the high-pressure compressor housing unit 62 in a direction (vertical direction in Fig. 3) perpendicular to the axial direction of the high-pressure shaft HS. Further, the exhaust bypass unit 67 is located inward (leftward in Fig. 3) from an outer end (rightward end in Fig. 3) of the low-pressure turbine housing unit 61 in the axial direction of the low-pressure shaft LS and inward (central part in Fig. 3) from an outer end (upward end in Fig. 3) of the turbine connection unit 63 and an outer end (downward end in Fig. 3) of the low-pressure turbine housing unit 61 in the direction (vertical direction in Fig. 3) perpendicular to the axial direction of the high-pressure shaft HS. In the present embodiment, the turbine housing 60 is formed by undergoing casting and machining.

The low-pressure shaft LS of the low-pressure supercharger LTC is supported by a low-pressure bearing LB. The low-pressure bearing includes a full-floating bearing that receives the radial load of the low-pressure shaft LS and a thrust bearing that receives the thrust load of the low-pressure shaft LS. The low-pressure bearing LB is accommodated in a low-pressure bearing housing unit 41. The high-pressure shaft HS of the high-pressure supercharger HTC is supported by a high-pressure bearing HB. The high-pressure bearing HB is a ball bearing that receives both of the radial load and the thrust load of the high-pressure shaft HS. The high-pressure bearing is accommodated in a high-pressure bearing housing unit 42. The low-pressure bearing housing unit 41 and high-pressure bearing housing unit 42 are formed integrally with each other and, in entirety, is referred to as a bearing housing 40.

The bearing housing 40 includes a lubricant supply-discharge mechanism 70, which supplies and discharges lubricant for lubricating both of the low-pressure bearing LB and the high-pressure bearing HB. The low-pressure bearing housing unit 41 is connected to a lubricant introduction passage 71 and a lubricant discharge passage 72 of the lubricant supply-discharge mechanism 70.

The bearing housing 40 includes a coolant supply-discharge mechanism 80 for supplying and discharging coolant that cools both of the low-pressure bearing LB and the high-pressure bearing HB. The low-pressure bearing housing unit 41 is connected to a coolant introduction passage 81 of the coolant supply-discharge mechanism 80, and the high-pressure bearing housing unit 42 is connected a coolant discharge passage 82 of the coolant supply-discharge mechanism 80.

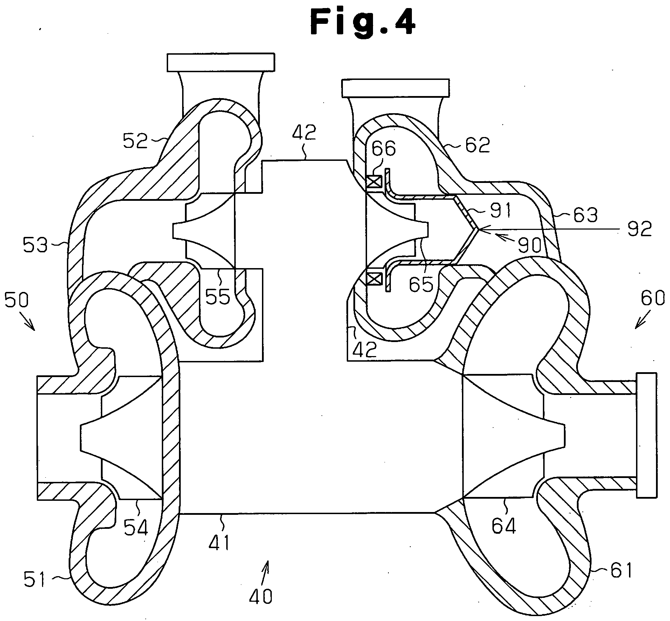

Fig. 4 is a partial cross-sectional view of a partial cross-sectional structure of the supercharger. The drawing does not show the intake bypass unit 57 and the exhaust bypass unit 67.

As shown in the drawing, the low-pressure compressor wheel 54 is larger than the high-pressure compressor wheel 55 in the radial direction. As a result, the low-pressure compressor housing unit 51 is larger than the high-pressure compressor housing unit 52 in the radial direction. Further, the low-pressure turbine wheel 64 is larger than the high-pressure turbine wheel 65 in the radial direction. As a result, the low-pressure turbine housing unit 61 is larger than the high-pressure turbine housing unit 62.

A variable flow rate mechanism 90, which varies the flow rate of the exhaust acting on the high-pressure turbine wheel 65, is arranged in the high-pressure turbine housing unit 62. The variable flow rate mechanism 90 includes a cylinder valve 91, which moves in the axial direction of the high-pressure shaft HS, and an actuator 92, which drives the cylinder valve 91. Further, a fixed vane 66, which restricts the flow direction of the exhaust acting on the high-pressure turbine wheel 65, is arranged in the high-pressure turbine housing unit 62. The fixed vane 66 is arranged to surround a basal side (left side in Fig. 4) of the high-pressure turbine wheel 65.

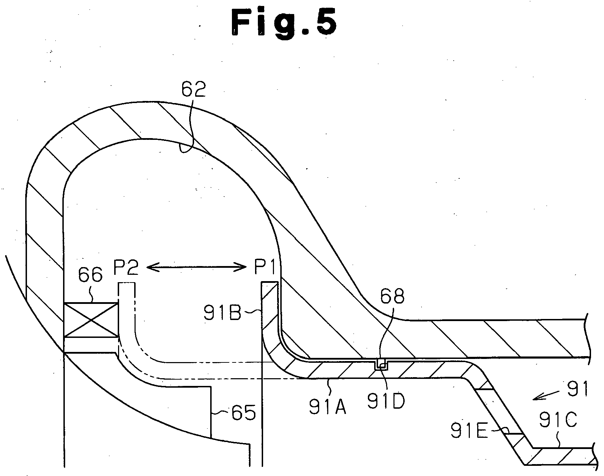

The variable flow rate mechanism 90 will now be described in detail with reference to Fig. 5.

As shown in the drawing, the cylinder valve 91 includes a cylinder portion 91A, which is cylindrical, a distal portion 91 B connected to the end of the cylinder portion 91 A that is located closer to the high-pressure turbine wheel 65, and a basal portion 91C connected to the end of the cylinder portion 91A at the opposite side of the high-pressure turbine wheel 65. The distal portion 91 B is annular and extends in a direction perpendicular to the axial direction of the high-pressure shaft HS from the end of the cylinder portion 91A that is located closer to the high-pressure turbine wheel 65. The basal portion 91C includes a part of which diameter is gradually decreased toward the opposite side of the high-pressure turbine wheel 65 relative to the cylinder portion 91 A and a shaft-like part that extends from the basal end of the diameter-decreasing part (right end in Fig. 5). Further, the basal portion 91C includes a discharge hole 91 E that discharges exhaust out of the cylinder valve 91. An output shaft of the actuator 92 is coupled to the shaft-like part of the basal portion 91C. Further, a seal groove 91 D extends through the entire circumference of the cylinder portion 91A opposing the inner circumference of the high-pressure turbine wheel 65. An annular seal member 68 is arranged in the seal groove 91 D.

The cylinder valve 91 is movable in the axial direction of the high-pressure shaft HS in a range from a fully-open position P1 to a fully-closed position P2, which are shown in the drawing. When the cylinder valve 91 is at the fully-open position P1, most of the exhaust flowing into the high-pressure turbine housing unit 62 flows out of the high-pressure turbine housing unit 62 without by the fixed vane 66 and without acting on the high-pressure turbine wheel 65. When the cylinder valve 91 is at the fully-closed position P2, most of the exhaust flowing into the high-pressure turbine housing unit 62 passes by the fixed vane 66. Further, the interior of the high-pressure turbine housing unit 62 is formed to enable such movement of the cylinder valve 91. Accordingly, the flow rate of the exhaust acting on the high-pressure turbine wheel 65 can be controlled by changing the position of the cylinder valve 91 in the axial direction of the high-pressure shaft HS.

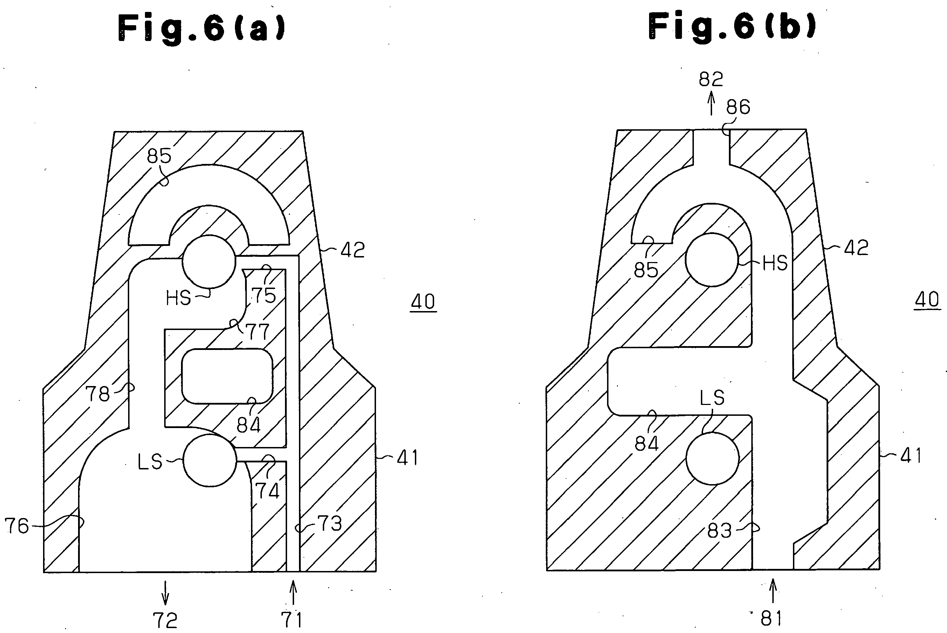

Next, the bearing housing 40 will be described in detail with reference to Fig. 6. Figs. 6(a) and 6(b) are cross-sectional views of the low-pressure shaft LS taken at different positions in the axial direction of the low-pressure shaft LS (axial direction of the high-pressure shaft HS). Fig. 6(a) schematically shows the cross-sectional structure of the bearing housing 40 centering on the lubricant supply-discharge mechanism 70, and Fig. 6(b) schematically shows a cross-sectional structure of the bearing housing 40 centering on the coolant supply-discharge mechanism 80.

First, as shown in Fig. 6(a), a main supply passage 73 extending vertically upward and including an opening in a vertically downward end face is formed in the bearing housing 40. Further, the bearing housing 40 includes a low-pressure side supply passage 74, which extends horizontally from the main supply passage 73 to supply lubricant to the low-pressure shaft LS, and a high-pressure side supply passage 75, which extends horizontally from the vertically upper end of the main supply passage 73 to supply lubricant to the high-pressure shaft HS. Further, a low-pressure side space including an opening formed in the vertically downward end face and the low-pressure shaft LS is formed in the bearing housing 40. Further, a high-pressure side space that includes the high-pressure shaft HS is formed in the bearing housing 40. The low-pressure side space 76 and high-pressure side space 77 are in communication with each other through a coupling passage 78, which extends vertically.

In such a structure, the lubricant drawn into the bearing housing 40 from the lubricant introduction passage 71 through the main supply passage 73 is supplied to the low-pressure shaft LS and the low-pressure bearing LB through the low-pressure side supply passage 74 and to the high-pressure shaft HS and the high-pressure bearing HB through the high-pressure side supply passage 75. Further, the lubricant that has lubricated the low-pressure shaft LS and the low-pressure bearing LB is discharged from the bearing housing 40 through the low-pressure side space 76 and the lubricant discharge passage 72. The lubricant that has lubricated the high-pressure shaft HS and the high-pressure bearing HB is discharged from the bearing housing 40 through the high-pressure side space 77, the coupling passage 78, the low-pressure side space 76, the lubricant discharge passage 72, and the lubricant discharge passage 72.

Next, as shown in Fig. 6(b), a supply passage 83 extending vertically upward and including an opening in the vertically downward end face is formed in the bearing housing 40. Further, the bearing housing 40 includes a low-pressure side passage 84, which extends horizontally from the supply passage 83 to supply coolant to the upper parts of the low-pressure shaft LS and the low-pressure bearing LB, and a high-pressure side passage 85, which extends from the vertically upper end of the supply passage 83 toward the high-pressure shaft HS and the high-pressure bearing HB to supply coolant to the upper parts of the high-pressure shaft HS and the high-pressure bearing HB. The high-pressure side passage 85 has a generally arch-shaped cross-section that surrounds the high-pressure shaft HS and the high-pressure bearing HB. Further, a discharge passage 86 is formed vertically above the high-pressure shaft HS and the high-pressure bearing HB in the high-pressure side passage 85 and opens in an end face at the vertically upper side of the bearing housing 40.

In such a structure, the coolant drawn into the bearing housing 40 from the coolant introduction passage 81 through the supply passage 83 flows into the low-pressure side passage 84 to cool the low-pressure shaft LS and the low-pressure bearing LB and also flows into the high-pressure side passage 85 to cool the high-pressure shaft HS and the high-pressure bearing HB. Then, the coolant that has been used for cooling is discharged from the bearing housing 40 through the exhaust passage 86 and the coolant discharge passage 82.

The supercharger system of to the present embodiment has the advantages described below.
(1) The internal combustion engine 1 is provided with the low-pressure supercharger LTC, which includes the low-pressure compressor wheel 54 arranged in the intake passage 20 and the low-pressure turbine wheel 64 arranged in the exhaust passage 30 and coupled to the low-pressure compressor wheel 54 by the low-pressure shaft LS, and the high-pressure supercharger HTC, which includes the high-pressure compressor wheel 55 arranged in the intake passage 20 and the high-pressure turbine wheel 65 coupled to the high-pressure compressor wheel 55 by the high-pressure shaft HS. Further, the compressor housing units 51 and 52 and the turbine housing units 61 and 62 are arranged so that the part of the high-pressure compressor housing unit 52 accommodating the high-pressure compressor wheel 55 and the part of the high-pressure turbine housing unit 62 accommodating the high-pressure turbine wheel 65 are both arranged in the space S formed between the low-pressure compressor housing unit 51, which accommodates the low-pressure compressor wheel 54, and the low-pressure turbine housing unit 61, which accommodates the low-pressure turbine wheel 64. Therefore, the overall size of the supercharger system in the direction perpendicular to the axial direction of the low-pressure shaft LS is smaller than a structure in which part of the high-pressure compressor housing unit 52 and part of the high-pressure turbine housing unit 62 are not located in the space S. Further, the overall size of the supercharger system in the axial direction of the low-pressure shaft LS is smaller than a structure in which part of a high-pressure compressor housing unit or part of a high-pressure turbine housing unit is located in the space S. Accordingly, it is ensured that the overall size of the supercharger system is reduced.
   Further, the length of the flow passage in the compressor connection unit 53 and turbine connection unit 63 may be shortened. This improves the compression efficiency of the entire supercharger system.
(2) The low-pressure compressor wheel 54 is larger in size in the radial direction than the high-pressure compressor wheel 55, and the low-pressure turbine wheel 64 is larger in size in the radial direction than the high-pressure turbine wheel 65. This ensures that the space S is obtained so that part of the high-pressure compressor housing unit 52 and part of the high-pressure turbine housing unit 62 are both located in the space S, which is formed between the low-pressure compressor housing unit 51 and the low-pressure turbine housing unit 61.
(3) The low-pressure bearing housing unit 41 and the high-pressure bearing housing unit 42 are formed integrally with each other. The integration of the bearing housing units 41 and 42 reduces the number of the components and avoids enlargement of the overall bearing housing 40.
(4) The low-pressure compressor housing unit 51 and the high-pressure compressor housing unit 52 are formed integrally with each other. This reduces the number of the components. Further, as described above, the distance between the low-pressure compressor housing unit 51 and the high-pressure compressor housing unit 52 in the axial direction of the low-pressure shaft LS can decreased. Thus, the overall size of the compressor housing 50 does not increase when the compressor housing units 51 and 52 are integrated.
(5) The intake bypass passage 23 bypassing the high-pressure compressor wheel 55 is formed integrally with the low-pressure compressor housing unit 51 and the high-pressure compressor housing unit 52. This reduces the number of components.
(6) The low-pressure turbine housing unit 61 and the high-pressure turbine housing unit 62 are formed integrally with each other. This reduces the number of components. Further, as described above, the distance between the low-pressure turbine housing unit 61 and the high-pressure turbine housing unit 62 in the axial direction of the low-pressure shaft LS can be decreased. Thus, the overall size of the compressor housing 50 does not increase when the turbine housing units 61 and 62 are integrated.
(7) The exhaust bypass passage 33, which bypasses the low-pressure turbine wheel 64, is formed integrally with the low-pressure turbine housing unit 61 and the high-pressure turbine housing unit 62. This reduces the number of components.
(8) The high-pressure bearing HB, which supports the high-pressure shaft HS, is a ball bearing. This shortens the high-pressure shaft HS in length in comparison to when the high-pressure bearing HB is formed by a full-floating bearing and a thrust bearing. Accordingly, the compressor housing units 51 and 52 and turbine housing units 61 and 62 can easily be arranged so that part of the high-pressure compressor housing unit 52 and part of the high-pressure turbine housing unit 62 are both located in the space S formed between the low-pressure compressor housing unit 51 and the low-pressure turbine housing unit 61.
(9) The high-pressure turbine housing unit 62 includes the variable flow rate mechanism 90, which varies the flow rate of the exhaust acting on the high-pressure turbine wheel 65. This accurately changes the supercharging properties of the high-pressure supercharger HTC in accordance with the operating condition of the engine. Further, when the variable flow rate mechanism 90 performs flow rate control so that exhaust does not act on the high-pressure turbine wheel 65, the high-pressure turbine housing unit 62 can function as a bypass passage that bypasses the high-pressure turbine wheel 65. This allows for elimination of the bypass passage and ensures that the overall size of the supercharger system is reduced in comparison to, for example, the prior art structure that includes a separate bypass passage connecting the upstream side and downstream side of the high-pressure turbine housing to bypass the high-pressure turbine wheel.
(10) The variable flow rate mechanism 90 includes the cylinder valve 91, which moves along the axial direction of the high-pressure shaft HS. In this manner, the cylinder valve 91 is formed as a valve that moves in the axial direction of the high-pressure shaft HS, that is, in a direction perpendicular to the direction in which exhaust flows. This decreases the force required to drive the valve 91. Thus, the actuator 92 of the variable flow rate mechanism 90 can be reduced in size, and the overall size of the supercharger system can be further reduced.

### <Second Embodiment>

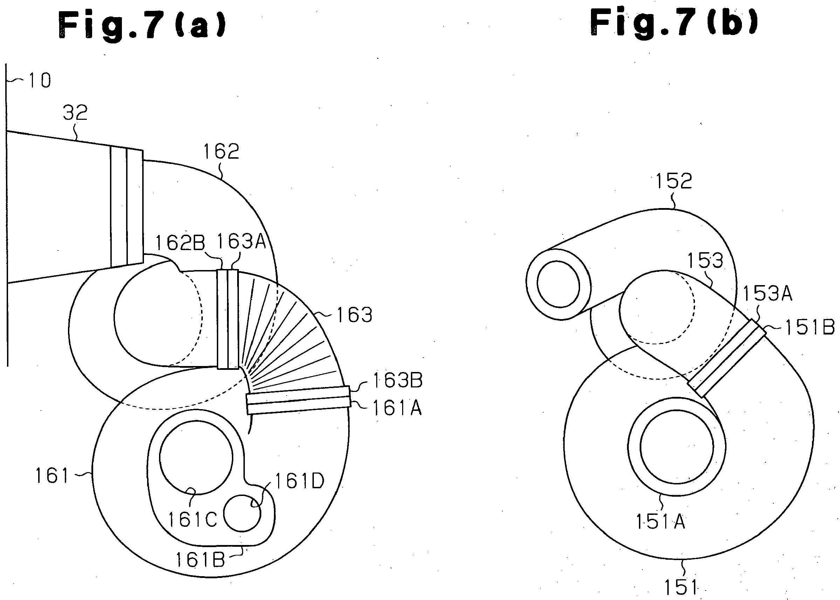

A supercharger system for an internal combustion engine according to a second embodiment of the present invention will now be described with reference to Fig. 7. The present embodiment differs from the first embodiment in that a low-pressure compressor housing 151 and a high-pressure compressor housing 152 are formed separately from each other and in that a low-pressure turbine housing 161 and a high-pressure turbine housing 162 are formed separately from each other. The following will mainly describe the differences from the first embodiment.

Fig. 7 is a side view showing the structure of a supercharger in the present embodiment. Fig. 7(a) is a side view showing the structure of a supercharger as viewed from the side of the low-pressure turbine housing 161, and Fig. 7(b) is a side view showing the structure of the supercharger as viewed from the side of the low-pressure compressor housing 151.

As shown in Fig. 7(a), the low-pressure turbine housing 161 and the high-pressure turbine housing 162 are formed separately from each other, and a separate turbine connection unit 163 is arranged between the low-pressure turbine housing 161 and the high-pressure turbine housing 162. The turbine connection unit 163 has an accordion structure and is formed from metal. The low-pressure turbine housing 161 and the turbine connection unit 163 are connected to each other by flanges 161A and 163B. The high-pressure turbine housing 162 and the turbine connection unit 163 are connected to each other by flanges 162B and 163A. A downstream flange 161 B of the low-pressure turbine housing 161 includes a low-pressure outlet port 161C and an exhaust bypass passage port 161 D.

As shown in Fig. 7(b), the low-pressure compressor housing 151 and the high-pressure compressor housing 152 are formed separately from each other. A separate compressor connection unit 153 is arranged for the low-pressure compressor housing 151 and the high-pressure compressor housing 152. The compressor connection unit 153 is formed from rubber. The low-pressure compressor housing 151 and the compressor connection unit 153 are connected to each other by flanges 151B and 163A. The high-pressure compressor housing 152 and the compressor connection unit 153 are connected to each other by flanges (not shown).

The supercharger system of the present embodiment has the advantages described below.
(1) The low-pressure compressor housing 151 and the high-pressure compressor housing 152 are formed separately from each other. Further, the low-pressure compressor housing 151 and the high-pressure compressor housing 152 are connected to each other by the compressor connection unit 153, which is formed from rubber. Thus, even if at least one of the low-pressure compressor housing 151 and the high-pressure compressor housing 152 includes a manufacturing variation or an assembly variation, such a variation is absorbed by resilient deformation of the compressor connection unit 153. Accordingly, the compressor housings 151 and 152 can easily be coupled to each other.
(2) The low-pressure turbine housing 161 and the high-pressure turbine housing 162 are formed separately from each other. Further, the low-pressure turbine housing 161 and the high-pressure turbine housing 162 are connected to each other by the metal turbine connection unit 163, which has the accordion structure. Accordingly, even if at least one of the low-pressure turbine housing 161 and the high-pressure turbine housing 162 includes a manufacturing variation or an assembly variation, such a variation is absorbed by resilient deformation of the turbine connection unit 163. Therefore, the turbine housings 161 and 162 can easily be coupled to each other.

Further, thermal expansion of the low-pressure turbine housing 161 and the high-pressure turbine housing 162 can be absorbed by resilient deformation of the turbine connection unit 163. Accordingly, cracks and the like caused by thermal expansion of the turbine housings 161 and 162 are prevented.

The supercharger system for an internal combustion engine according to the present invention is not limited to the structures exemplified in the above embodiments and may be described as described below.

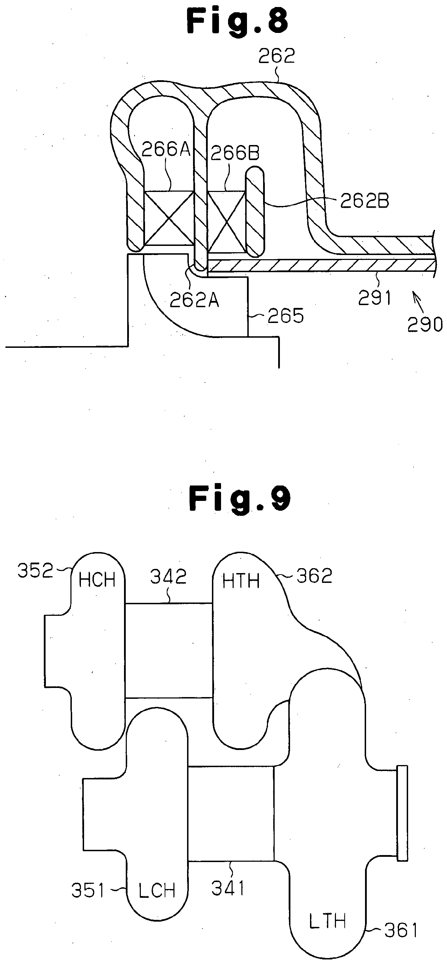

In the first embodiment, a single-stage fixed vane 66 is arranged along the axial direction of the high-pressure shaft HS in the high-pressure turbine housing unit 62. Instead, double-stage fixed vanes 266A and 266B may be arranged in the axial direction of the high-pressure shaft HS, as shown in Fig. 8. More specifically, in addition to the first fixed vane 266A surrounding the basal portion (left end in Fig. 8) of a high-pressure turbine wheel 265, the second fixed vane 266B surrounds a distal portion (right end in Fig. 8) of the high-pressure turbine wheel 265. The high-pressure turbine housing unit 262 includes a first wall 262A, which that extends from its inner circumferential surface to between the first fixed vane 266A and the second fixed vane 266B to fix the fixed vanes 266A and 266B, and a second wall 262B, which is located at the opposite side (right side in Fig. 8) of the first wall 262A with the second fixed vane 366B arranged in between and forms with the first wall 262A a flow passage for the exhaust that flows into the second fixed vane 266B. Further, a cylinder valve 291 of a variable flow rate mechanism 290 is movable toward the high-pressure turbine wheel 265 until contacting the first wall 262A. At a fully-closed position shown in Fig. 8, the cylinder valve 291 prevents exhaust from acting on the high-pressure compressor wheel 265 through the second fixed vane 266B. Further, at a fully-open position of the cylinder valve 291, most of the exhaust flowing to the high-pressure turbine housing unit 262 passes through between the second wall 262B and the opposing inner circumferential surface of the high-pressure turbine housing unit 262 and flows out of the high-pressure turbine housing unit 262.

In each of the above embodiments, the fixed vane 66 is preferably arranged in the high-pressure turbine housing unit 62 to restrict the flow of exhaust acting on the high-pressure turbine wheel 65. This is preferable for increasing the recovery efficiency of the exhaust energy with the wheel 65. However, the high-pressure turbine is not limited to such a structure, and such a fixed vane may be eliminated.

In each of the above embodiments, the variable flow rate mechanism 90 includes the cylinder valve 91, which moves along the axial direction of the high-pressure shaft HS. This is preferable for decreasing the force required to drive this valve 91. However, the structure of the variable flow rate mechanism in the present invention is not limited in such a manner and may be changed in any manner as long as it is arranged in the high-pressure turbine housing and varies the flow rate of the exhaust acting on a high-pressure turbine wheel.

In each of the above embodiments, a ball bearing is used as the high-pressure bearing HB. This is preferable for decreasing the length of the high-pressure shaft HS. However, the structure of the high-pressure bearing HB is not limited in such a manner and, in the same manner as the low-pressure bearing LB, may be formed by a full-floating bearing and a thrust bearing. Further, a ball bearing may be used as the low-pressure bearing LB.

In the second embodiment, the turbine connection unit 163 includes the accordion structure. However, the structure of a connection unit that connects the low-pressure turbine housing 161 and the high-pressure turbine housing 162 is not limited in such a manner, and the connection unit may be formed from any other resilient member.

In the first embodiment, the exhaust bypass unit 67 forming the exhaust bypass passage 33, which bypasses the low-pressure turbine wheel 64, is formed integrally with the low-pressure turbine housing unit 61 and the high-pressure turbine housing unit 62. However, the exhaust bypass passage 33 may be formed separately from the turbine housing units 61 and 62.

In the second embodiment, the compressor connection unit 153 is formed from rubber. However, the connection unit that connects the low-pressure compressor housing 151 and the high-pressure compressor housing 152 is not limited to such a structure. For example, in the same manner as the turbine connection unit 163, the connection structure may have an accordion structure.

In the first embodiment, the intake bypass unit 57 forming the intake bypass passage 23, which bypasses the high-pressure compressor wheel 55, is formed integrally with the low-pressure compressor housing unit 51 and the high-pressure compressor housing unit 52. However, the intake bypass passage 23 may be formed separately from the compressor housing units 51 and 52.

In the first embodiment, the low-pressure compressor housing unit 51 and the high-pressure compressor housing unit 52 are formed integrally with each other, and the low-pressure turbine housing unit 61 and the high-pressure turbine housing unit 62 are formed integrally with each other. Further, in the second embodiment, the low-pressure compressor housing 151 and the high-pressure compressor housing 152 are formed separately from each other, and the low-pressure turbine housing 161 and the high-pressure turbine housing 162 separately from each other. However, the arrangements of the compressor housing and the turbine housing are not limited in such a manner. Only the compressor housing may be formed separately, and only the turbine housing may be formed separately.

In the above embodiments, the low-pressure bearing housing unit 41 and the high-pressure bearing housing unit 42 are formed integrally with each other. This is preferable for having the lubricant supply-discharge mechanism 70 and the coolant supply-discharge mechanism 80 of the shafts LS and HS and the bearings LB and HB shared by the low-pressure supercharger LTC and the high-pressure supercharger HTC. However, the bearing housings in the present invention are not limited to in such a manner, and bearing housings may be formed separately.

In the above embodiments, the compressor housings and turbine housings are arranged so that part of the high-pressure compressor housing and part of the high-pressure turbine housing are both located in the space formed between the low-pressure compressor housing and the high-pressure turbine housing. However, the supercharger system according to the present invention is not limited to in such a manner. As shown in Fig. 9, compressor housings 351 and 352 and turbine housing units 361 and 362 may be arranged so that only part of a high-pressure turbine housing unit 362 is located in a space formed between the low-pressure compressor housing 351 and the low-pressure turbine housing unit 361. Further, in this case, a low-pressure bearing housing 341 and a high-pressure bearing housing 342 may be formed separately from each other. Alternatively, the compressor housings and turbine housings may be arranged so that only part of the high-pressure compressor housing is located in the space formed between the low-pressure compressor housing and the high-pressure turbine housing.

In short, it is only necessary to mount compressor housings and turbine housings be arranged so that at least either a part of the second compressor housing, which accommodates the second compressor wheel, and a part of the second turbine housing, which accommodates the second turbine wheel, is located in a space formed between the first compressor housing, which accommodates the first compressor wheel, and the first turbine housing, which accommodates the first turbine wheel.

## Claims

1. A supercharger system for an internal combustion engine, comprising:
a first supercharger (LTC); and
a second supercharger (HTC), wherein
the first supercharger (LTC) includes a first compressor wheel (54) arranged in an intake passage (20) of the internal combustion engine, a first turbine wheel (64) arranged in an exhaust passage (30) of the internal combustion engine and coupled by a first shaft (LS) to the first compressor wheel (54), a first compressor housing (51) accommodating the first compressor wheel (54), and a first turbine housing (61) accommodating the first turbine wheel (64);
the second supercharger (HTC) includes a second compressor wheel (55) arranged in the intake passage (20), a second turbine wheel (65) arranged in the exhaust passage (30) and coupled by a second shaft (HS) to the second compressor wheel (55), a second compressor housing (52) accommodating the second compressor wheel (55), and a second turbine housing (62) accommodating the second turbine wheel (65);
the first and second compressor housings (51, 52) and the first and second turbine housings (61, 62) are configured so that at least either one of part of the second compressor housing (52) and part of the second turbine housing (62) is located in a space (S) formed between the first compressor housing (51) and the first turbine housing (61); and
the first compressor wheel (54) is larger in size in a radial direction than the second compressor wheel (55), and the first turbine wheel (64) is larger in size in the radial direction than the second turbine wheel (65);
the supercharger system being **characterized in that** the second turbine housing (62) accommodates a variable flow rate mechanism (90) that can vary a flow rate of exhaust acting on the second turbine wheel (65), the variable flow rate mechanism (90) including a cylinder valve (91) that moves along an axial direction of the second shaft (HS); and the cylinder valve (91) being configured so that most of the exhaust flowing into the second turbine housing (62) is acting on the second turbine wheel (65) when flowing out of the second turbine housing (62), if the cylinder valve (91) is at a fully-closed position (P2), and that most of the exhaust flowing into the second turbine housing (62) is not acting on the second turbine wheel (65) when flowing out of the second turbine housing (62), if the cylinder valve (91) is at a fully-open position (P1).

2. The supercharger system for an internal combustion engine according to claim 1, wherein the first and second compressor housings (51, 52) and the first and second turbine housings (61, 62) are configured so that part of the second compressor housing (52) and part of the second turbine housing (62) are both located in the space (S).

3. The supercharger system for an internal combustion engine according to claim 1 or 2, wherein the second shaft (HS) is supported by a second bearing, which is a ball bearing.

4. The supercharger system for an internal combustion engine according to any one of claims 1 to 3, wherein
the first and second compressor housings (51, 52) and the first and second turbine housings (61, 62) are configured so that part of the second compressor housing (52) and part of the second turbine housing (62) are both located in the space (S),
the first supercharger (LTC) includes a first bearing that supports the first shaft (LS) and a first bearing housing (41) that accommodates the first bearing,
the second supercharger (HTC) includes a second bearing that supports the second shaft (HS) and a second bearing housing (42) that accommodates the second bearing, and
the first bearing housing (41) and the second bearing housing (42) are formed integrally with each other.

5. The supercharger system for an internal combustion engine according to any one of claims 1 to 4, wherein
the first compressor wheel (54) is arranged at an upstream side of the second compressor wheel (55) in the intake passage (20),
the first and second compressor housings (51, 52) and the first and second turbine housings (61, 62) are configured so that part of the second compressor housing (52) is located in the space (S), and
the first compressor housing (51) and the second compressor housing (52) are formed integrally with each other.

6. The supercharger system for an internal combustion engine according to claim 5, wherein
the first compressor wheel (54) is larger in size in a radial direction than the second compressor wheel (55), and
an intake bypass passage, which bypasses the second compressor wheel (55), is integrally formed with the first compressor housing (51) and the second compressor housing (52).

7. The supercharger system for an internal combustion engine according to any one of claims 1 to 4, wherein the first compressor housing (51) and the second compressor housing (52) are formed separately from each other.

8. The supercharger system for an internal combustion engine according to claim 7, wherein the first compressor housing (51) and the second compressor housing (52) are connected by a connection unit formed by a resilient member.

9. The supercharger system for an internal combustion engine according to any one of claims 1 to 8, wherein
the first turbine wheel (64) is arranged at a downstream side of the second turbine wheel (65) in the exhaust passage (30),
the first and second compressor housings (51, 52) and the first and second turbine housings (61, 62) are configured so that part of the second turbine housing (62) is located in the space (S), and
the first turbine housing (61) and the second turbine housing (62) are formed integrally with each other.

10. The supercharger system for an internal combustion engine according to claim 9, wherein
the first turbine wheel (64) is larger in size in a radial direction than the second turbine wheel (65), and
an exhaust bypass passage, which bypasses the first turbine wheel (64), is formed integrally with the first turbine housing (61) and the second turbine housing (62).

11. The supercharger system for an internal combustion engine according to any one of claims 1 to 8, wherein the first turbine housing (61) and the second turbine housing (62) are formed separately from each other.

12. The supercharger system for an internal combustion engine according to claim 11, wherein the first turbine housing (61) and the second turbine housing (62) are connected by a connection unit formed by a resilient member.

13. The supercharger system for an internal combustion engine according to claim 12, wherein the connection unit has an accordion structure.

## Patentansprüche

1. Aufladesystem für einen Verbrennungsmotor mit:
einem ersten Auflader (LTC), und
einem zweiten Auflader (HTC), wobei
der erste Auflader (LTC) ein erstes Kompressorrad (54), das in einem Ansaugtrakt (20) des Verbrennungsmotors angeordnet ist, ein erstes Turbinenrad (64), das in einem Abgaskanal (30) des Verbrennungsmotors angeordnet ist und durch eine erste Welle (LS) mit dem ersten Kompressorrad (54) verbunden ist, ein erstes Kompressorgehäuse (51), das das erste Kompressorrad (54) unterbringt, und ein erstes Turbinengehäuse (61) aufweist, das das erste Turbinenrad (64) unterbringt,
der zweite Auflader (HTC) ein zweites Kompressorrad (55), das in dem Ansaugtrakt (20) angeordnet ist, ein zweites Tubinenrad (65), das in dem Abgaskanal (30) angeordnet ist und durch eine zweite Welle (HS) mit dem zweiten Kompressorrad (55) verbunden ist, ein zweites Kompressorgehäuse (52), das das zweite Kompressorrad (55) unterbringt, und ein zweites Turbinengehäuse (62) aufweist, das das zweite Turbinenrad (65) unterbringt,
das erste und zweite Kompressorgehäuse (51, 52) und das erste und zweite Turbinengehäuse (61, 62) derart gestaltet sind, dass ein Teil des zweiten Kompressorgehäuses (52) und/oder ein Teil des zweiten Turbinengehäuses (62) in einem zwischen dem ersten Kompressorgehäuse (51) und dem ersten Turbinengehäuse (61) gebildeten Zwischenraum (S) angeordnet ist, und
das erste Kompressorrad (54) in einer radialen Richtung größer ist als das zweite Kompressorrad (55), und das erste Turbinenrad (64) in der radialen Richtung größer ist als das zweite Turbinenrad (65), und wobei
das Aufladesystem **dadurch gekennzeichnet ist, dass** das zweite Turbinengehäuse (62) einen Variier-Durchflussmechanismus (90) unterbringt, der einen Durchfluss von auf das zweiten Turbinenrad (65) wirkendem Abgas verändert, wobei der Variier-Durchflussmechanismus (90) ein Zylinderventil (91) aufweist, das entlang einer axialen Richtung der zweiten Welle (HS) bewegbar ist; und das Zylinderventil (91) derart gestaltet ist, dass ein Großteil des in das zweite Turbinengehäuse (62) strömenden Abgases beim Abströmen aus dem zweiten Turbinengehäuse (62)auf das zweite Turbinenrad (65) wirkt, falls das Zylinderventil (91) in einer vollständig-geschlossenen Position (P2) ist, und dass ein Großteil des in das zweite Turbinengehäuse (62) strömenden Abgases nicht auf das zweite Turbinenrad (65) wirkt beim Abströmen aus dem zweiten Turbinengehäuse (62), falls das Zylinderventil (91) in einer vollständig-geöffneten Position (P1) ist.

2. Aufladesystem für einen Verbrennungsmotor nach Anspruch 1, wobei das erste und zweite Kompressorgehäuse (51, 52) und das erste und zweite Turbinengehäuse (61, 62) derart gestaltet sind, dass sowohl ein Teil des zweiten Kompressorgehäuses (52) als auch ein Teil des zweiten Turbinengehäuses (62) in dem Zwischenraum (S) angeordnet sind.

3. Aufladesystem für einen Verbrennungsmotor nach einem der Ansprüche 1 oder 2, wobei die zweite Welle (HS) durch ein zweites Lager gelagert ist, das ein Kugellager ist.

4. Aufladesystem für einen Verbrennungsmotor nach einem der Ansprüche 1 bis 3, wobei
das erste und zweite Kompressorgehäuse (51, 52) und das erste und zweite Turbinengehäuse (61, 62) derart gestaltet sind, dass Teil des zweiten Kompressorgehäuses (52) und Teil des zweiten Turbinengehäuses (62) beide in dem Zwischenraum (S) angeordnet sind,
der erste Auflader (LTC) ein erstes Lager, das die erste Welle (LS) lagert, und ein erstes Lagergehäuse (41) aufweist, das das erste Lager unterbringt,
der zweite Kompressor (HTC) ein zweites Lager, das die zweite Welle (HS) lagert, und ein zweites Lagergehäuse (42) aufweist, das das zweite Lager lagert, und
das erste Lagergehäuse (41) und das zweite Lagergehäuse (42) miteinander integral ausgebildet sind.

5. Aufladesystem für einen Verbrennungsmotor nach einem der Ansprüche 1 bis 4, wobei
das erste Kompressorrad (54) an einer stromauf befindlichen Seite des zweiten Kompressorrads (55) in dem Ansaugtrakt (20) angeordnet ist,
das erste und zweite Kompressorgehäuse (51, 52) und das erste und zweite Turbinengehäuse (61, 62) derart gestaltet sind, dass ein Teil des zweiten Kompressorgehäuses (52) in dem Zwischenraum (S) angeordnet ist, und
das erste Kompressorgehäuse (51) und das zweite Kompressorgehäuse (52) miteinander integral ausgebildet sind.

6. Aufladesystem für einen Verbrennungsmotor nach Anspruch 5, wobei
das erste Kompressorrad (54) in einer radialen Richtung größer ist als das zweite Kompressorrad (55), und
ein Ansaug-Bypass-Kanal, der das zweite Kompressorrad (55) umgeht, mit dem ersten Kompressorgehäuse (51) und dem zweiten Kompressorgehäuse (52) integral ausgebildet ist.

7. Aufladesystem für einen Verbrennungsmotor nach einem der Ansprüche 1 bis 4, wobei das erste Kompressorgehäuse (51) und das zweite Kompressorgehäuse (52) voneinander getrennt ausgebildet sind.

8. Aufladesystem für einen Verbrennungsmotor nach Anspruch 7, wobei das erste Kompressorgehäuse (51) und das zweite Kompressorgehäuse (52) durch eine von einem elastischen Element gebildeten Verbindungseinheit verbunden sind.

9. Aufladesystem für einen Verbrennungsmotor nach einem der Ansprüche 1 bis 8, wobei
das erste Turbinenrad (64) an einer stromab gelegenen Seite des zweiten Turbinenrads (65) in dem Abgaskanal (30) angeordnet ist,
das erste und zweite Kompressorgehäuse (51, 52) und das erste und zweite Turbinengehäuse (61, 62) derart gestaltet sind, dass ein Teil des zweiten Turbinengehäuses (62) in dem Zwischenraum (S) angeordnet ist, und
das erste Turbinengehäuse (61) und das zweite Turbinengehäuse (62) miteinander integral ausgebildet sind.

10. Aufladesystem für einen Verbrennungsmotor nach Anspruch 9, wobei
das erste Turbinenrad (64) in einer radialen Richtung größer ist als das zweite Turbinenrad (65), und
ein Abgas-Bypass-Kanal, der das erste Turbinenrad (64) umgeht, mit dem ersten Turbinengehäuse (61) und dem zweiten Turbinengehäuse (62) integral ausgebildet ist.

11. Aufladesystem für einen Verbrennungsmotor nach einem der Ansprüche 1 bis 8, wobei das erste Turbinengehäuse (61) und das zweite Turbinengehäuse (62) voneinander getrennt gebildet sind.

12. Aufladesystem für einen Verbrennungsmotor nach Anspruch 11, wobei das erste Turbinengehäuse (61) und das zweite Turbinengehäuse (62) durch eine von einem elastischen Element gebildeten Verbindungseinheit verbunden sind.

13. Aufladesystem für einen Verbrennungsmotor nach Anspruch 12, wobei die Verbindungseinheit eine Akkordeon-Struktur aufweist.

## Revendications

1. Système de turbocompresseur pour un moteur à combustion interne comprenant :
un premier turbocompresseur (LTC) ; et
un second turbocompresseur (HTC), dans lequel :
le premier turbocompresseur (LTC) comprend une première roue de compresseur (54) agencée dans un passage d'admission (20) du moteur à combustion interne, une première roue de turbine (64) agencée dans un passage d'échappement (30) du moteur à combustion interne et couplée par un premier arbre (LS) à la première roue de compresseur (54), un premier boîtier de compresseur (51) logeant la première roue de compresseur (54) et un premier boîtier de turbine (61) logeant la première roue de turbine (64) ;
le second turbocompresseur (HTC) comprend une seconde roue de compresseur (55) agencée dans le passage d'admission (20), une seconde roue de turbine (65) agencée dans le passage d'échappement (30) et couplée par un second arbre (HS) à la seconde roue de compresseur (55), un second boîtier de compresseur (52) logeant la seconde roue de compresseur (55) et un second boîtier de turbine (62) logeant la seconde roue de turbine (65) ;
les premier et second boitiers de compresseur (51, 52) et les premier et second boitiers de turbine (61, 62) sont configurés de sorte qu'au moins chacune de la partie du second boîtier de compresseur (52) et de la partie du second boîtier de turbine (62) est positionnée dans un espace (S) formé entre le premier boîtier de compresseur (51) et le premier boîtier de turbine (61) ; et
la première roue de compresseur (54) est supérieure du point de vue de la taille dans une direction radiale à la seconde roue de compresseur (55), et la première roue de turbine (64) est supérieure du point de vue de la taille dans la direction radiale à la seconde roue de turbine (65) ;
le système de turbocompresseur étant **caractérisé en ce que** le second boîtier de turbine (62) loge un mécanisme à débit variable (90) qui peut modifier un débit d'échappement agissant sur la seconde roue de turbine (65), le mécanisme à débit variable (90) comprenant une soupape de cylindre (91) qui se déplace dans une direction axiale du second arbre (HS) ; et la soupape de cylindre (91) étant configurée de sorte que la majeure partie de l'échappement s'écoulant dans le second boîtier de turbine (62) agit sur la seconde roue de turbine (65) lors de l'écoulement à l'extérieur du second boîtier de turbine (62), si la soupape de cylindre (91) est dans une position complètement fermée (P2), et **en ce que** la majeure partie de l'échappement s'écoulant dans le second boîtier de turbine (62) n'agit pas sur la seconde roue de turbine (65) lors de l'écoulement hors du second boîtier de turbine (62), si la soupape de cylindre (91) est dans une position complètement ouverte (P1).

2. Système de turbocompresseur pour un moteur à combustion interne selon la revendication 1, dans lequel les premier et second boitiers de compresseur (51, 52) et les premier et second boitiers de turbine (61, 62) sont configurés de sorte qu'une partie du second boîtier de compresseur (52) et une partie du second boîtier de turbine (62) sont toutes deux positionnées dans l'espace (S).

3. Système de turbocompresseur pour un moteur à combustion interne selon la revendication 1 ou 2, dans lequel le second arbre (HS) est supporté par un second roulement qui est un roulement à billes.

4. Système de turbocompresseur pour un moteur à combustion interne selon l'une quelconque des revendications 1 à 3, dans lequel :
les premier et second boitiers de compresseur (51, 52) et les premier et second boîtiers de turbine (61, 62) sont configurés de sorte qu'une partie du second boîtier de compresseur (52) et une partie du second boîtier de turbine (62) sont toutes deux positionnées dans l'espace (S),
le premier turbocompresseur (LTC) comprend un premier roulement qui supporte le premier arbre (LS) et un premier boîtier de roulement (41) qui loge le premier roulement,
le second turbocompresseur (HTC) comprend un second roulement qui supporte le second arbre (HS) et un second boîtier de roulement (42) qui loge le second roulement, et
le premier boîtier de roulement (41) et le second boîtier de roulement (42) sont formés de manière solidaire entre eux.

5. Système de turbocompresseur pour un moteur à combustion interne selon l'une quelconque des revendications 1 à 4, dans lequel :
la première roue de compresseur (54) est agencée du côté en amont de la seconde roue de compresseur (55) dans le passage d'admission (20),
les premier et second boitiers de compresseur (51, 52) et les premier et second boitiers de turbine (61, 62) sont configurés de sorte qu'une partie du second boîtier de compresseur (52) est positionnée dans l'espace (S), et
le premier boîtier de compresseur (51) et le second boîtier de compresseur (52) sont formés de manière solidaire entre eux.

6. Système de turbocompresseur pour un moteur à combustion interne selon la revendication 5, dans lequel :
la première roue de compresseur (54) est supérieure du point de vue de la taille dans une direction radiale à la seconde roue de compresseur (55), et
un passage de dérivation d'admission, qui contourne la seconde roue de compresseur (55), est formé de manière solidaire avec le premier boîtier de compresseur (51) et le second boîtier de compresseur (52).

7. Système de turbocompresseur pour un moteur à combustion interne selon l'une quelconque des revendications 1 à 4, dans lequel le premier boîtier de compresseur (51) et le second boîtier de compresseur (52) sont formés séparément l'un de l'autre.

8. Système de turbocompresseur pour un moteur à combustion interne selon la revendication 7, dans lequel le premier boîtier de compresseur (51) et le second boîtier de compresseur (52) sont raccordés par une unité de raccordement formée par un élément résilient.

9. Système de turbocompresseur pour un moteur à combustion interne selon l'une quelconque des revendications 1 à 8, dans lequel :
la première roue de turbine (64) est agencée d'un côté en aval de la seconde roue de turbine (65) dans le passage d'échappement (30),
les premier et second boîtiers de compresseur (51, 52) et les premier et second boitiers de turbine (61, 62) sont configurés de sorte qu'une partie du second boîtier de turbine (62) est positionnée dans l'espace (S), et
le premier boîtier de turbine (61) et le second boîtier de turbine (62) sont formés de manière solidaire entre eux.

10. Système de turbocompresseur pour un moteur à combustion interne selon la revendication 9, dans lequel :
la première roue de turbine (64) est supérieure du point de vue de la taille dans une direction radiale à la seconde roue de turbine (65), et
un passage de dérivation d'échappement qui contourne la première roue de turbine (64) est formé de manière solidaire avec le premier boîtier de turbine (61) et le second boîtier de turbine (62).

11. Système de turbocompresseur pour un moteur à combustion interne selon l'une quelconque des revendications 1 à 8, dans lequel le premier boîtier de turbine (61) et le second boîtier de turbine (62) sont formés séparément l'un de l'autre.

12. Système de turbocompresseur pour un moteur à combustion interne selon la revendication 11, dans lequel le premier boîtier de turbine (61) et le second boîtier de turbine (62) sont raccordés par une unité de raccordement formée par un élément résilient.

13. Système de turbocompresseur pour un moteur à combustion interne selon la revendication 12, dans lequel l'unité de raccordement a une structure en accordéon.
